# EUROPEAN PATENT APPLICATION

(11) **EP 2 505 882 A1**
(43) Date of publication of application: **03.10.2012**
(21) Application number: 12160767.5
(22) Date of filing: 22.03.2012
(51) Int. Cl.: F16K 5/06

(54) **Sealing insert for a ball valve, seat for ball valve and ball valve**

(30) Priority: 29.03.2011 IT VI20110068
(71) Applicant: Tyco Valves & Controls Italia S.r.L., 29018 Lugagnano Val D'arda (IT)
(72) Inventor: Manzetti, Bruno, 29018 Lugagnano Val D'Arda/PC (IT)
(74) Representative: Grünecker, Kinkeldey, Stockmair & Schwanhäusser

(57) **Abstract**

This invention describes a sealing insert (200) for a ball valve, a seat for a ball valve including that sealing insert and a ball valve including that seat. The sealing insert has a multilayer structure in which layers of graphite alternate with metal sheets. The metal sheets can be, for example, sheets of steel. The insert described in this invention permits the optimization of the ball valve sealing insert, particularly under conditions of high temperature and in the presence of fluids that include solid particles in suspension.

## Description

### TECHNICAL FIELD OF THE INVENTION

This invention concerns the field of ball valves. Specifically, this invention concerns the field of sealing inserts for ball valves and seats for ball valves. Even more specifically, this invention concerns the field of ball valves with metallic seats, that is, valves with metal-on-metal seats.

### STATE OF THE ART

Ball valves are widely used in different industrial sectors. For example, ball valves can be applied to piping systems in which the movements of combustible and similar fluids must be interrupted.

Generally, ball valves are made up of a valve body adapted to be coupled with, for example, piping on which the valve must be applied to and by a ball housed in the valve body so that it can rotate inside the interior of same. The ball is equipped with a through-hole, or port, in such a way that the rotation of the ball allows the hole to align with the piping to which the valve is applied (open valve) or to take it out of alignment so as to prevent the passage of fluid (closed valve). The ball is coupled to the valve body by the seat. Specifically, the seat ensures the hermetic sealing of the valve when it is in direct contact with the external surface of the ball. In general, there is a seat upstream, that is, in correspondence with the valve entrance, and another seat downstream, that is, in correspondence with the valve exit.

Metal-on-metal seals are used on existing ball valves for dirty fluids because seats with flexible inserts would quickly become damaged. However, metal-on-metal seals are difficult to produce.

Furthermore, one of the problems of the known valves of the state of the art is that of ensuring the seal of the valve, whether at high temperatures, for example up to 400° C - 500° C, or in the presence of particularly dirty fluids, for example those containing solid particles in suspension. One example of such a fluid is natural gas, which can contain, e.g., particles of sand having diameters on the order of 200 micrometers.

The presence of solid particles in suspension is particularly critical at high pressures, e.g., in the case of pressures of between 20 Bar and 420 Bar which are typically reached in various industrial plants.

### SUMMARY OF THE INVENTION

This invention concerns ball valves. Specifically, the present invention is based on the idea of equipping the ball valve with a sealing insert formed by a multilayer structure, alternating layers of graphite and thin sheets of metal. The multilayer structure comprising layers of graphite alternated with metal sheets ensures better sealing whether at high temperatures or in the presence of fluids containing solid particles in suspension.

According to one embodiment of the present invention, a sealing insert for a ball valve is provided, having an annular shape so that it can be applied to the seat of a ball valve, the insert having a multilayer structure in the direction perpendicular to the opening of the annular shape in which layers of graphite are alternated with layers of metal.

According to another embodiment of the invention, a sealing insert is provided wherein the total number of layers is equal to at least seven.

In yet another embodiment of the invention, a sealing insert is provided wherein the graphite layers are between 0.5 and 1 mm thick.

In yet another embodiment of the invention, a sealing insert is provided wherein the metal layers are between 0.5 and 0.8 mm thick.

According to another embodiment of the present invention, a sealing insert is provided wherein the metal layers include at least one of the following materials: steel, stainless steel or Inconel®. These materials are in fact particularly compatible with the fluids which flow through the valve.

According to another embodiment of the present invention, a seat for a ball valve is supplied, the seat being adapted for coupling the ball of the ball valve with the valve body of the ball valve, the seat including a sealing insert according to the present invention.

According to another embodiment of the present invention, a seat for a ball valve is supplied that comprises a first portion comprising a recess adapted to house at least one portion of the sealing insert and a second portion adapted to be coupled to the first portion so as to keep the sealing insert in place. The structure of the seat comprising two portions between which the sealing insert is kept in place allows the unit to ensure the stability of the system and thus optimize the seal.

According to another embodiment of the present invention, a seat for a ball valve is provided wherein the second portion comprises a retainer ring.

According to another embodiment of the present invention, a seat for a ball valve is provided wherein the second portion comprises a recess in correspondence to the recess of the first portion such that the sealing insert is housed in the space enclosed by both recesses.

According to another embodiment of the present invention, a seat for a ball valve is provided wherein the first portion further comprises a groove adjacent to the recess, the groove being adapted for housing a seal such that the seal is in contact with the sealing insert. The seal may be, for example, a graphite gasket. The presence of a seal in contact with the sealing insert further improves the sealing of the system.

According to another embodiment of the present invention, a seat for a ball valve is provided wherein the first portion comprises a protruding portion, the protruding portion being located opposite to the recess, the protruding portion comprising one or more grooves, each of the grooves being adapted for housing one or more sealing elements, such as O-rings of an elastomeric material. The protruding portion, which juts out in a direction opposite the recess that houses the sealing insert may be, for example, adapted for coupling the seat to the valve body of the valve.

According to another embodiment of the present invention, a seat for a ball valve is provided wherein the first portion and the second portion are kept in contact by means of fastening elements, for example by means of screws.

According to another embodiment of the present invention, a seat for a ball valve is provided wherein the first portion further comprises a system of holes for injecting a sealing material toward the ball of the ball valve. This can be advantageous, for example, in a situation where, because of wear and tear, the sealing insert cannot maintain the seal in an appropriate manner.

According to another embodiment of the present invention, a seat for a ball valve is provided wherein the first portion further comprises an emergency metal seal for ensuring the seal in cases in which the sealing insert has been damaged.

According to another embodiment of the present invention, a ball valve is provided that comprises a valve body, a ball and at least one seat according to the present invention.

According to another embodiment of the present invention, a ball valve is supplied that comprises two seats according to the present invention, the seats being placed in opposite positions with respect to the ball so that the valve is provided with the seat according the present invention at both the entry side and the exit side.

According to another embodiment of the present invention, a valve is provided wherein the seat is housed in the valve body so that it is movable with respect to the valve body. The fact that the seat is housed in the valve body so that it is movable allows precise regulation of the pressure with which the seat is pressed against the valve body. Furthermore, being movable, it can easily be pressed by the pressure of the fluid against the ball so as to achieve the seal.

According to another embodiment of the present invention, a valve is provided wherein the valve body comprises a cavity adapted for housing flexible means which are contiguous to the seat in such a way as to push the seat toward the ball. The flexible means can include, for example, a spring. The spring can, for example, supply the necessary thrust to the seat to ensure the seal even at low pressures, for example pressures on the order of 1 Bar.

### BRIEF DESCRIPTION OF THE FIGURES

The present invention will be described with reference to the attached figures in which the same reference labels indicate corresponding parts and/or similar parts of the system. In the figures:
Figure 1 schematically shows a cross-section of a valve according to one embodiment of the present invention;
Figure 2 schematically shows an enlargement of one portion of the valve seat shown in Figure 1;
Figure 3a schematically shows an enlargement of the section of a portion of a seat according to one embodiment of the present invention;
Figure 3b schematically shows a global three-dimensional representation as an exploded view of the system shown in Figure 3a;
Figure 4 schematically illustrates the structure of a sealing insert according to one embodiment of the present invention.

### DETAILED DESCRIPTION OF THE INVENTION

In the following, the present invention is described with reference to particular embodiments as shown in the attached figures. However, this invention is not limited to the specific embodiments described in the detailed description that follows and shown in the figures, but rather, the embodiments described simply exemplify different aspects of the present invention, the purpose of which is defined by the claims.

Further modifications and variations of this invention will be clear to a person skilled in the art. Consequently, the present description must be considered as including all said modifications and/or variations of the present invention, the purpose of which is defined by the claims.

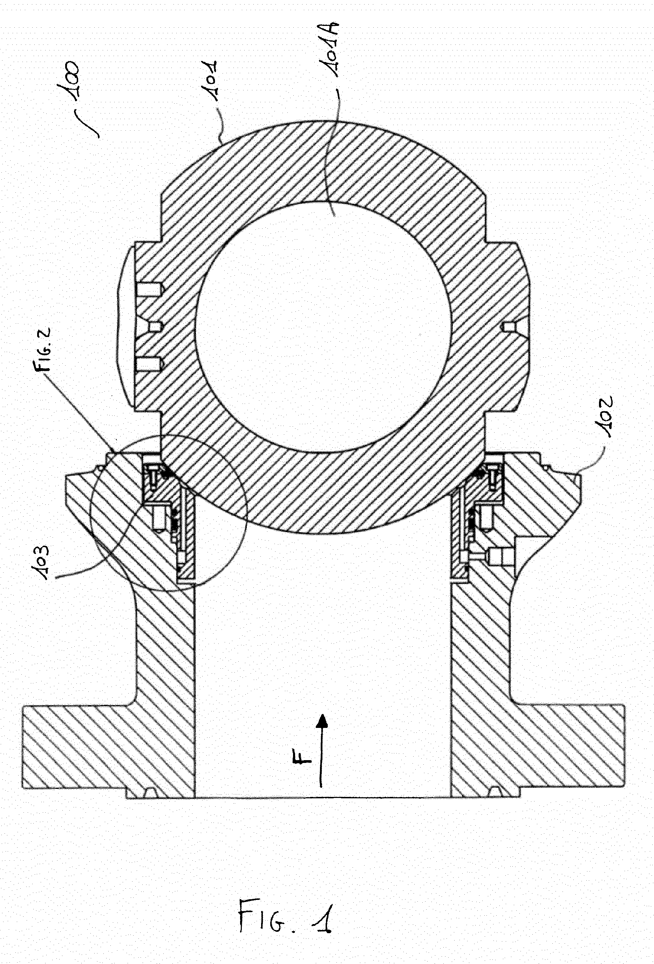

Figure 1 schematically shows a cross-section view of a valve 100 according to one embodiment of the present invention. The valve comprises a ball 101, a valve body 102 and a seat 103 adapted for coupling the ball 101 to the valve body 102.

Valve body 102 can be adapted, for example, for coupling with the piping into which valve 100 is to be inserted.

Ball 101 can be made, for example, of steel. The external surface of ball 101 can also be coated with hard material, for example with a material from the tungsten carbide group.

Valve 100 as shown in Figure 1 is closed. In fact, as can be seen schematically in the figure, the through-hole 101A of ball 101 is perpendicular to the direction of entering flow indicated by arrow F. The entering flow F is thus interrupted by the side wall of ball 101. The ball can be rotated so as to align the through-hole 101A with the direction of the flow F and thus open valve 100 and allow flow F to pass through it. The rotation of ball 101 can be activated by means of rotational devices known in the state of the art. Specifically, the rotation of ball 101 can be activated either by automatic rotational devices or manual rotational devices.

As can be seen in Figure 1, ball 101 is housed in valve body 102, and the coupling between valve body 102 and ball 101 is accomplished by means of seat 103. Seat 103 thus ensures that the system is sealed, since it is placed in direct contact with the external surface of ball 101, adapted for preventing the passage of fluid F.

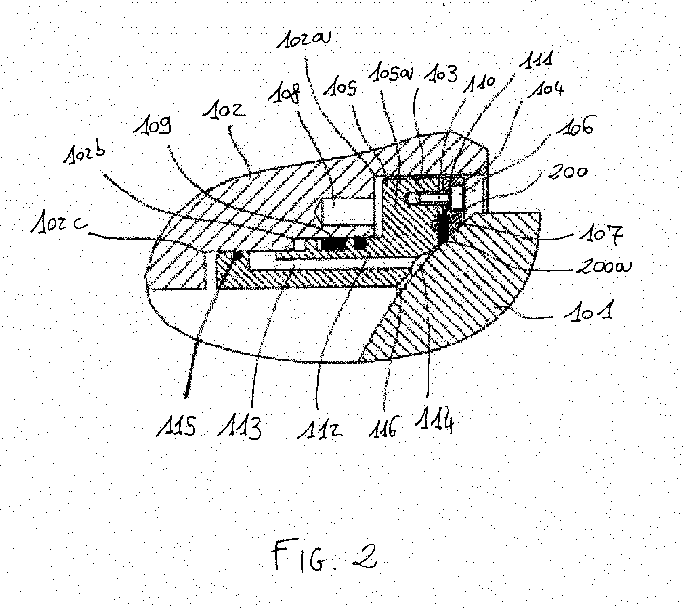

Figure 2 schematically illustrates the magnified view of the upper portion of seat 103 of valve 100 shown in Figure 1. Specifically, Figure 2 shows a magnified view of the area circled in Figure 1. The system has cylindrical symmetry with respect to an axis parallel to the direction of flow F: consequently, the structure shown schematically in Figure 2 can be found again by observing other transversal sections of the system. For example, as can be seen in Figure 1, the structure shown in Figure 2 can again be found mirrored in the lower portion of valve 100, confirming the cylindrical symmetry of the system.

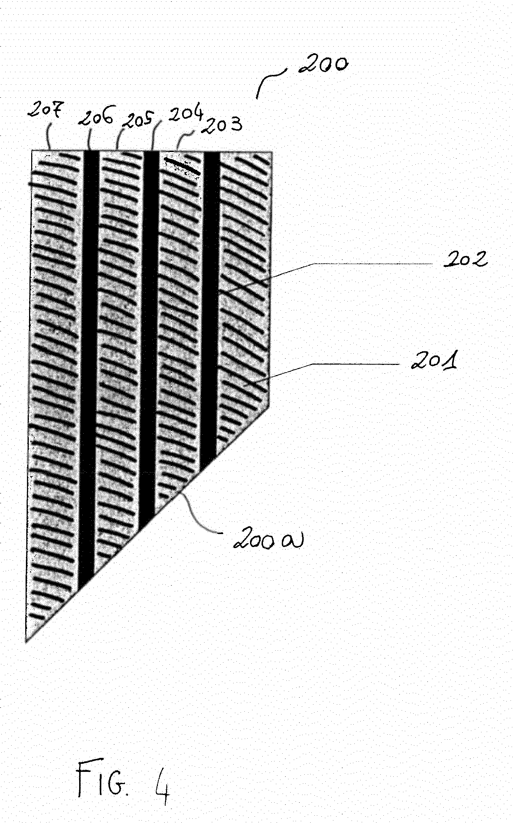

Seat 103 comprises a sealing insert 200 that will be described in detail below with reference to Figure 4. Sealing insert 200 is so that it can be applied to ball 101 of ball valve 100. Specifically, sealing insert 200 includes a circular central hole whose diameter corresponds to the diameter of the spherical cap of ball 101 around which sealing insert 200 is applied. Internal surface 200a of sealing insert 200 (that is, the surface of the ring-shaped structure that surrounds the central hole of same) is in direct contact with the external surface of ball 101 so as to ensure the seal of the valve.

Seat 103 comprises two portions in such a way that sealing insert 200 can be inserted between such two portions. Specifically, seat 103 comprises a first portion 105 and a second portion 104. The first portion 105 is positioned upstream in the input direction of the valve. The second portion 104 is positioned downstream in the input direction of the valve. The second portion 104 faces thus ball 101, while the first part 105 faces valve body 102.

The first portion 105 comprises a main body 105a. Main body 105a of first portion 105 comprises a recess 110 for housing at least one portion of sealing insert 200. Specifically, as can be seen schematically in Figure 2, recess 110 is adapted for housing about half the thickness of sealing insert 200. Recess 110 is created in that part of main body 1 05a that faces ball 101. Recess 110 can be adapted for housing different fractions of the thickness of sealing insert 200. Furthermore, recess 110 of main body 105a of first portion 105 can be adapted for housing the entire thickness of sealing insert 200.

Second portion 104 is adapted for coupling with first portion 105 so as to keep sealing insert 200 in position. Second portion 104 can be made, for example, in the shape of a containment ring as shown schematically in Figure 2. Second portion 104 can include a recess 111 in correspondence with recess 110 of first portion 105, such that sealing insert 200 is housed in the space enclosed between the two recesses 110 and 111. Recess 111 is thus located on the surface of second portion 104 facing the first portion 105. If recess 110 of main body 105a of first portion 105 is adapted for housing the entire thickness of sealing insert 200, second portion 104 need not include the recess 111.

First portion 105 and second portion 104 are kept in contact by means of fastening means 106. In the example shown in Figure 2, the fastening means 106 comprise screws. Specifically, a threaded cavity is created in main body 105a of first portion 105. Furthermore, there is also a cavity that is created which is adapted for housing the head of the screw in second portion 104. In this way, the screw allows first portion 105 to be firmly fixed to second portion 104.

In the example shown in Figure 2, the first portion 105 further comprises a groove 107 adjacent to recess 110. Groove 107 is adapted for housing a gasket, for example a graphite gasket or a metal-reinforced spiral wound gasket, in such a way that said gasket is in direct contact with sealing insert 200.

First portion 105 further comprises a projecting portion 112. Specifically, portion 112 projects from main body 105a in the opposite direction from the recess 110. Portion 112 is thus turned in the opposite direction from ball 101. As can be seen in Figure 2, portion 112 may comprise one or more grooves 109, each of said grooves 109 being adapted for housing one or more sealing devices, such as O-rings made of elastomeric material.

Valve body 102 of valve 100 is structured so as to house seat 103. Valve body 102, seen in cross-section, thus features a first recess 1 02a that is adapted for housing the main body 105a of first portion 105 of seat 103 and a second recess 102b and a third recess 102c adapted for housing the protruding portion 112 of first portion 105 of seat 103.

Seat 103 may furthermore be housed in valve body 102 in such a way that it is movable with respect to the valve body itself. Indeed, as can be seen in Figure 2, there is a space between valve body 102 and main body 105a of first portion 105 of seat 103 and also between valve body 102 and the ends of protruding portion 112 of first portion 105 of seat 103. This allows seat 103 to be shifted in a direction parallel to the direction of flow F. Specifically, this allows seat 103 to be moved so as to approach either the ball 101 or the valve body 102.

This allows precise regulation of the pressure with which seat 103 including the sealing insert 200 will be pressed against ball 101 so that it is possible to regulate the seal with accuracy. Specifically, valve body 102 comprises a cavity 108 that is adapted for housing flexible means which are contiguous to the seat 103 so as to thrust the seat 103 toward the ball 101.

The cavity 108 is positioned in correspondence with the first recess 102a of the valve body so that the flexible means housed in the cavity can exercise their action against main body 1 05a of first portion 105 of seat 103. The flexible means can consist, for example, of a spring. The flexible means allow the thrusting of the entire seat 103 against ball 101 so as to improve the seal. Specifically, the flexible means can, for example, supply the necessary thrust to the seat to ensure a seal, even at low pressures, for example as low as 1 Bar.

The protruding portion 112 of first portion 105 of seat 103 furthermore comprises a system of holes 113 adapted to make a sealing material arrive in groove 114, positioned so as to be adjacent to the ball 101, in case insert 200 cannot ensure the seal. This can be useful, for example, in case of wear and tear of insert 200.

Furthermore, the system comprises a recess 115 which can house, for example, an O-ring to keep the sealant from escaping from the system of holes 113 in a direction that is opposite to the groove 114. In this way, the sealant is effectively guided toward groove 114.

The system further comprises a metallic emergency seal 116 adapted to ensure the seal, should insert 200 be damaged.

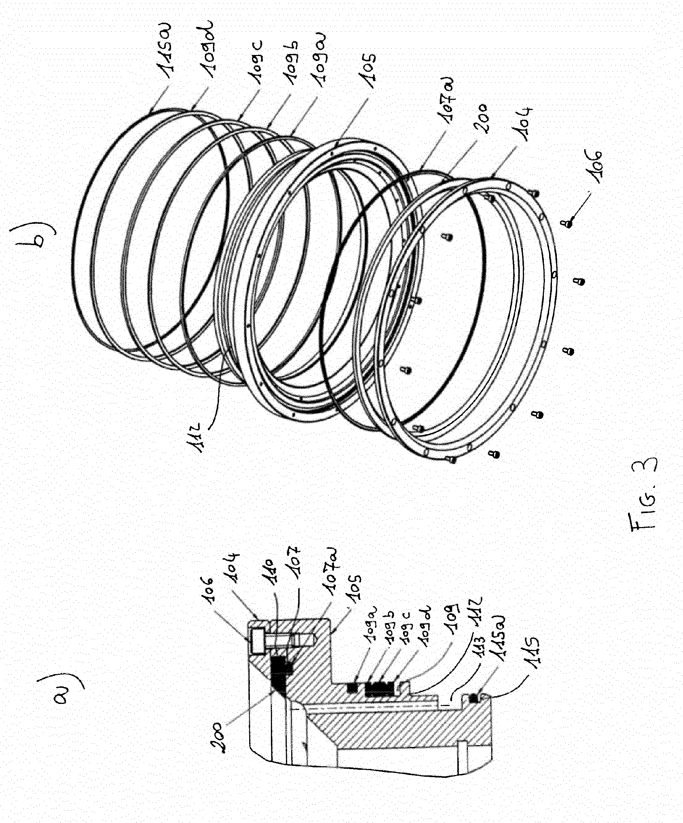

Figure 3a is a schematic representation of a magnified view of the section of one portion of a seat according to one embodiment of this invention. Figure 3b schematically shows an overall three-dimensional representation, in an exploded view of the system shown in Figure 3a. Specifically, Figures 3a and 3b show in detail a system of sealants applied to the seat according to one embodiment of this invention. The seat shown in Figures 3a and 3b is similar to the one shown in Figure 2. Specifically, the seat shown in Figure 3a comprises a first portion 105, a second portion 104 and a sealing insert 200. The second portion 104 is made in the shape of a containment ring. The entire thickness of sealing insert 200 is housed in recess 110 that is formed in the first portion 105 of the seat. The second portion 104 thus does not present a recess adapted for housing part of the thickness of sealing insert 200. The second portion 104 thus presents a substantially flat surface adapted to coupling with the surface of first portion 105 in which the entire thickness of sealing insert 200 is housed.

Furthermore, second portion 104 is fastened to first portion 105 by means of fastening means 106, for example by means of screws.

The system comprises a gasket 107a housed in groove 107 adjacent to the recess which houses sealing insert 200. Gasket 107a can be, for example, a metal-reinforced spiral wound gasket.

Furthermore, the system includes two grooves in the projecting portion 112 of the first portion 105 of the seat. The first groove is adapted to house a graphite gasket 109a.

The second groove is adapted to house a system made up of, in order, a first backup ring 109b, a sealing O-ring 109c and a second backup ring 109d. In practice, the sealing O-ring 109c is positioned between the first backup ring 109b and the second backup ring 109d. The backup rings 109b and 109d may be, for example, made of PTFE (polytetrafluoroethylene) or of loaded PTFE.

The system furthermore includes an O-ring 115a housed in groove 115 positioned in proximity to the exit of the system of holes 113. O-ring 115a is adapted to hold back the sealant that flows in the system of holes 113 as described in detail above with reference to Figure 2. O-ring 115a thus contributes to the effective guidance of the sealant toward the ball of the valve whenever this is advantageous.

Figure 4 schematically illustrates the structure of a sealing insert 200 according to one embodiment of the present invention. Specifically, a vertical section of a portion of the annular structure is shown.

Sealing insert 200 has a multilayer structure in the direction perpendicular to the opening of the annular structure. Graphite layers alternate with metal layers.

Specifically, in the example shown in Figure 4, four graphite layers 201, 203, 205 and 207 alternate with metal layers 202, 204 and 206.

The external parts of the sealing insert are formed by graphite layers. Specifically, in Figure 4, the external parts are formed by layers 201 and 207 respectively.

Graphite layers 201, 203, 205 and 207 may be provided, for example, in the form of sheets. Furthermore, metal layers 202, 204 and 206 may be held together to graphite layers 201, 203, 205 and 207 thanks to the particular structure of the surfaces of the metal layers. Specifically, the surfaces of the metal layers may be corrugated so as to adhere effectively to the graphite layers. For example, on the surfaces of the metal layers, it is possible to make corrugations similar to those made on the surface of graters. These corrugations allow the metal layers to grip the graphite layers simply by means of mechanical action. In practice, the corrugations of the surfaces of the metal layers are adapted to penetrate into the graphite layers so as to grip them.

The graphite layers can have a thickness comprised between 0.5 mm and 1 mm. The metal layers can be made, for example, of steel, stainless steel or lnconel®.

Figure 4 shows a sealing insert 200 comprising, in total, seven layers (four layers of graphite and three of metal). However, the total number of layers making up the sealing insert can vary. For example, the total number of layers making up the sealing insert can vary according to the size of the seat, or even the valve with which the sealing insert will be used.

Figure 4 shows the internal surface 200a of sealing insert 200, that is, the surface of the annular structure that surrounds the central hole of the same. Surface 200a is adapted to be placed in direct contact with the external surface of ball 101 of valve 100 so as to ensure that the valve will be sealed. In the case shown in Figure 4, surface 200a is slanted so as to improve adherence to the surface of the ball. Specifically, in the case shown in Figure 4, the sealing insert has an annular form in which the hole of the ring is in the shape of a truncated cone. The larger base of the truncated cone is turned toward the ball so as to further improve the seal of the system.

Alternatively, surface 200a can be curved and can have a curvature radius corresponding to the curvature radius of ball 101.

Even though the present invention has been described with reference to the embodiments described above, it is clear to the person skilled in the art that it is possible to implement various modifications, variations and improvements on the invention on the basis of the instruction above and within the ambit of the attached claims without departing from the object and the ambit of protection of the invention.

For example, the present invention can be employed for ball valves of different sizes, for example for valves of sizes between 2 inches and 60 inches. Furthermore, the valve and the other components can be made of different materials. For example, the ball, the valve body and the seat can be made of different types of steel, such as carbon steel, stainless steel or exotic steels. Furthermore, it is possible to provide ball valves with only one seat according the present invention, for example only on the input side or only on the output side of the valve, and with a second seat known in the state of the art on the other side of the valve. Or on the other hand, it is possible to produce ball valves with two seats according to the present invention in such a way that the valve is equipped with the seat according to this invention both in input as well as output.

Furthermore, the ambits which are believed to be known by experts in the field have not been described, in order to avoid an excessive and useless obscuring of the invention described.

Consequently, the invention is not limited to the embodiments described above, but limited only by the ambit of protection of the attached claims.

## Claims

1. Sealing insert (200) for a ball valve (100), said insert (200) having an annular shape so as to be adapted to be applied to the seat (103) of the ball valve (100), said insert (200) having a multilayer structure along the direction perpendicular to the opening of the annular shape, wherein graphite layers (201, 203, 205, 207) are alternated with metal layers (202, 204, 206).

2. Sealing insert according to claim 1, wherein the total number of layers is equal to at least seven.

3. Sealing insert according to one of claims 1 or 2, wherein said graphite layers (201, 203, 205, 207) have a thickness comprised between 0.5 mm and 1 mm.

4. Sealing insert according to one of claims 1 to 3, wherein said metal layers (202, 204, 206) have a thickness comprised between 0.5 and 0.8 mm.

5. Sealing insert according to one of claims 1 to 4, wherein said metal layers (202, 204, 206) comprise at least one of the following materials: steel, stainless steel or lnconel®.

6. Seat (103) for a ball valve (100), said seat (103) being adapted to couple the ball (101) of said ball valve (100) to the valve body (102) of said ball valve (100), said seat (103) comprising a sealing insert (200), according to one of claims 1 to 5.

7. Seat according to claim 6, comprising a first portion (105) comprising a recess (110) adapted to house at least a portion of said sealing insert (200) and a second portion (104) adapted to be coupled to said first portion (105) so as to keep said sealing insert (200) in place.

8. Seat according to claim 7, wherein said second portion (104) comprises a retainer ring.

9. Seat according to one of claims 7 or 8, wherein said second portion (104) comprises a recess (111) in correspondence to said recess (110) of said first portion (105) so that said sealing insert (200) is housed in the space enclosed by both recesses (110, 111).

10. Seat according to one of claims 7 to 9, wherein said first portion (105) further comprises a groove (107) adjacent to said recess (110), said groove being adapted to house a seal (107a) so that said seal (1 07a) is in contact with said sealing insert (200).

11. Seat according to one of claims 7 to 10, wherein said first portion (105) comprises a protruding portion (112), said protruding portion (112) being opposed to said recess (110), said protruding portion (112) comprising one or more grooves (109), each of said grooves (109) being adapted to house one or more sealing elements.

12. Seat according to one of claims 7 to 11, wherein said first portion (105) and said second portion (104) are kept in contact by means of fastening means (106), for example by means of screws.

13. Seat according to one of claims 7 to 12, wherein said first portion (105) further comprises a system of holes (113) adapted to inject sealing material toward the ball (101) of the ball valve (100).

14. Seat according to one of claims 7 to 13, wherein said first portion (105) further comprises an emergency metal seal (116) adapted to guarantee the seal in case said sealing insert (200) is damaged.

15. Ball valve (100), comprising a valve body (102) a ball (101) and at least one seat (103) according to one of claims 6 to 14.

16. Valve according to claim 15, comprising two seats (103) according to one of claims 6 to 14, said seats being placed in opposed positions with respect to said ball (101) so that said valve is provided with a seat (103) according to one of claims 6 to 14 at the input side and with a seat (103) according to one of claims 6 to 14 at the output side.

17. Valve according to one of claims 15 or 16, wherein said seat (103) is housed in said valve body (102) in such a way that said seat (103) is movable with respect to said valve body (102).

18. Valve according to claim 17, wherein said valve body (102) comprises a cavity (108) adapted to house elastic means abutting said seat (103) so as to push said seat (103) toward said ball (101).
